# EUROPEAN PATENT APPLICATION

(11) **EP 1 923 682 A2**
(43) Date of publication of application: **21.05.2008**
(21) Application number: 07119799.0
(22) Date of filing: 31.10.2007
(51) Int. Cl.: G01L 1/24

(54) **Collision detection optical fiber sensor**

(30) Priority: 31.10.2006 JP 2006295764
(71) Applicant: Hitachi Cable, Ltd., Chiyoda-ku Tokyo (JP); Denso Corporation, Kariya-shi, Aichi-ken (JP)
(72) Inventor: Abe, Tomiya c/o Hitachi Cable, Ltd., Tokyo (JP); Kobayashi, Shigenori c/o Denso Corporation, Aichi (JP); Suzuki, Akira c/o Denso Corporation, Aichi (JP); Tsutsuda, Katsushi c/o Hitachi Cable, Ltd., Tokyo (JP); Yamamoto, Satoshi c/o Hitachi Cable, Ltd., Tokyo (JP); Takaba, Mitsuo c/o Hitachi Cable, Ltd., Tokyo (JP); Hishida, Yasuyuki c/o Hitachi Cable, Ltd., Tokyo (JP)
(74) Representative: Gill, David Alan

(57) **Abstract**

An optical fiber **1** includes a core **11** and a cladding material **12**. In a collision detection optical fiber sensor **100**, a plurality of linear members **2** and **3** are twisted around an outer periphery of the cladding material **12** of the optical fiber **1**. An elastic member **6** of the liner member **2** has an elasticity different from that of an elastic member **7** of the first linear member **3**. The hardness of the elastic member **6** is lower than that of the elastic member **7**. A rubber hardness difference measured by a durometer type A according to a JIS K**6253** between the elastic member **6** and the elastic member **7** is not less than **10**.

## Description

The present invention relates to a collision detection optical fiber sensor for detecting a collision.

As an impact detecting sensor for detecting an impact such as collision applied to an object, there is a sensor using an optical fiber. In an optical fiber type sensor, when the impact is applied to the object, bending or warping occurs in an optical fiber, so that the impact is detected by detecting a variation in quantity of a light propagated through the optical fiber, due to a bending loss and a compression loss. Such optical sensor is generally called as "collision detection optical fiber sensor".

As the collision detection optical fiber type sensors, Japanese Patent Publication No. 6-48220, Japanese Patent Laid-Open No. 2005-207768, Japanese Patent Laid-Open No. 2005-031067, and Japanese Patent Laid-Open No. 2002-286561 respectively disclose sensors, in each of which a filament, a spiral wire, an insulated linear member or the like is spirally wound at an outer periphery of an optical fiber such that bending or warping easily occurs in the optical fiber, for the purpose of improving a sensitivity.

However, according to the conventional optical fiber sensors, there is a disadvantage in that the sensitivity of the sensor cannot be obtained enough, since the optical fiber has a high rigidity, so that an optical transmission loss due to the bending or the compression is difficult to occur.

The invention seeks to provide for a collision detection optical fiber sensor having advantages over known such sensors.

According to a feature of the present invention, a collision detection optical fiber sensor comprises:
an optical fiber including a core and a cladding material;
a first linear member having an elasticity and twisted around an outer periphery of the cladding material; and
a second linear member having an elasticity different from that of the first linear member, and twisted around the outer periphery of the cladding material together with the first linear member.

The invention is advantageous in providing a collision detection optical fiber sensor with high sensitivity and high precision.

Further, in the collision detection optical fiber sensor, the first linear member and the second linear member may be disposed alternately along a circumferential direction of the optical fiber to be twisted around the optical fiber.

Still further, in the collision detection optical fiber sensor, a first linear member group comprising a plurality of the first linear member and a second linear member group comprising a plurality of the second linear members may be disposed alternately along a circumferential direction of the optical fiber to be twisted around the optical fiber.

In the collision detection optical fiber sensor, each of the first linear member and the second linear member may comprise a tension member and an elastic member covering an outer periphery of the tension member.

In the collision detection optical fiber sensor, each of the first linear member and the second linear member may comprise an elastic member with a string-shape.

In the collision detection optical fiber sensor, it is preferable that a rubber hardness difference measured by a durometer type A according to a JIS K**6253** between the elastic member of the first linear member and the elastic member of the second linear member is not less than **10**.

In the collision detection optical fiber sensor, the elastic member may comprise a silicone rubber.

In the collision detection optical fiber sensor, the tension member may comprise a copper wire.

In the collision detection optical fiber sensor, each of the first linear member and the second linear member may consist of an elastic member with a string-shape.

According to the present invention, it is possible to provide a collision detection optical fiber sensor with high sensitivity and high precision.

The invention is described further hereinafter, by way of example only, with reference to the accompanying drawings in which:
**FIGS. 1**A and **1**B are schematic diagrams showing a collision detection optical fiber sensor in a first preferred embodiment according to the invention, wherein **FIG.1**A is a cross sectional view thereof, and **FIG.1**B is a side view thereof;
**FIG.2** is an explanatory diagram showing an example of using the collision detection optical fiber sensor;
**FIG.3** is an explanatory diagram showing the collision detection optical fiber sensor of **FIG.2** in a state that a bending deformation is occurred by applying a load;
**FIGS.4**A and **4**B are schematic diagrams showing a collision detection optical fiber sensor in a second preferred embodiment according to the invention, wherein **FIG.4**A is a cross sectional view thereof, and **FIG.4**B is a side view thereof;
**FIGS.5**A and **5**B are schematic diagrams showing a collision detection optical fiber sensor in a third preferred embodiment according to the invention, wherein **FIG.5**A is a cross sectional view thereof, and **FIG.5**B is a side view thereof;
**FIGS.6**A and **6**B are schematic diagrams showing a collision detection optical fiber sensor in a fourth preferred embodiment according to the invention, wherein **FIG. 6**A is a cross sectional view thereof, and **FIG.6**B is a side view thereof;
**FIG.7** is a characteristic diagram showing a relationship between hardness difference and sensitivity in Examples **1**, **2**, **4** to **8** shown in TABLE **1**; and
**FIG.8** is a characteristic diagram showing a relationship between hardness difference and sensitivity in Examples **9**, **10**, **12** to **15** shown in TABLE **2**.

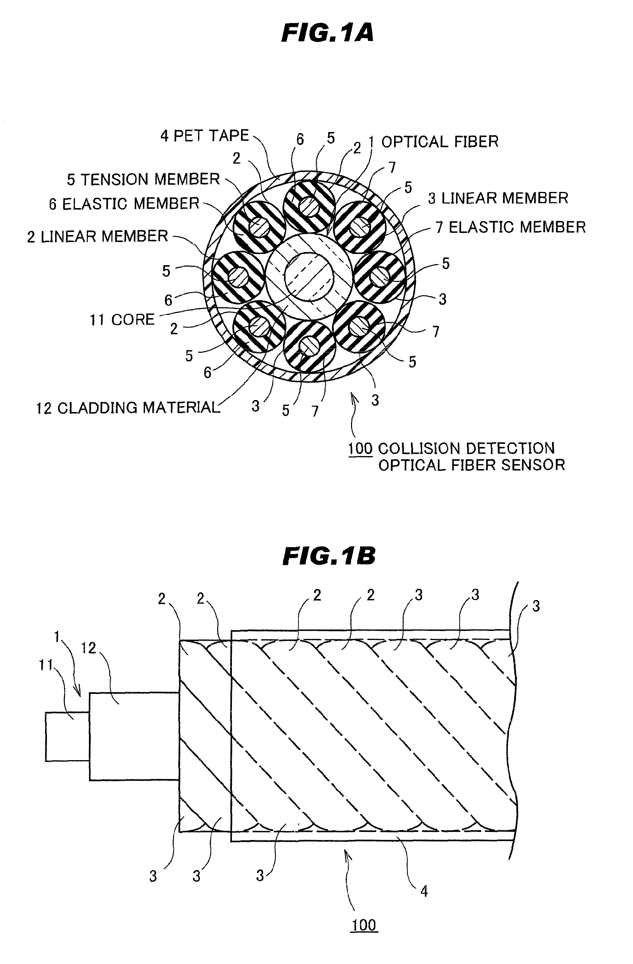

**FIGS.1**A and **1**B are schematic diagrams showing a collision detection optical fiber sensor in a first preferred embodiment according to the invention, wherein **FIG.1**A is a cross sectional view thereof, and **FIG.1**B is a side view thereof.

As shown in **FIG.1**A, a collision detection optical fiber sensor **100** comprises an optical fiber **1** composed of a synthetic resin that is disposed at a center of the collision detection optical fiber sensor **100**, four linear members (first linear members) **2** arranged to be twisted around an outer periphery of the optical fiber **1**, four linear members (second linear members) **3** having an elasticity lower than (namely, harder than) that of the first linear members **4**, and a PET tape **4** wound around an outer periphery of the first and second linear members **2**, **3**.

The optical fiber 1 comprises a core **11** and a cladding material **12** provided around the core **11**, and the core 11 has a refractive index higher than that of the cladding material **12**.

The core **11** has a function of transmitting a light. A material of the core **11** is not particularly limited if the material has an optical transmission function. For example, acrylic resin represented by polymethyl methacrylate, aromatic resin represented by polystyrene and polycarbonate, or alicyclic transparent resin may be used. Further, for the purpose of improving heat resistance or durability, a crosslinked polymer which is fabricated by crosslinking process after doping a crosslinking agent to the aforementioned resin. As the crosslinked polymer, crosslinked acrylic resin (thermosetting acrylic resin), silicone resin or the like may be used.

The cladding material **12** has a function of confining the light propagating through the core **11** within the core **11**, and has the refractive index smaller than that of the core **11**. As a material of the cladding material **12**, fluorine based resin such as fluorinated acrylate resin, fluorinated vinylidene, tetrafluoroethylene resin (TFE), tetrafluoroethylene/hexafluoropropylene copolymer (FEP), tetrafluoroethylene/perfluoroalkyl vinylether copolymer (PFA), ethylene tetrafluoroethylene copolymer (ETFE), fluorinated vinylidene/tetrafluoroethylene/hexafluoropropylene terpolymer, silicone rubber or the like may be used.

As to the structure of the optical fiber, it is essential to be composed of the core and the cladding material provided outside the core. Further, the optical fiber **1** may further comprise a jacket layer provided at the outer periphery of the cladding material **12** as necessary, so as to protect the core **11** and the cladding material **12** from an external damage.

As a material of the jacket layer, polyethylene, nylon, ethylene-tetrafluoroethylene copolymer (ETFE), soft polyvinylchloride (PVC), rubber, or the like may be used.

The first linear member **2** comprises a tension member **5** as a core, and an elastic member (first elastic member) **6** covering the tension member **5**. Similarly, the second linear member **3** comprises the tension member **5** as a core, and an elastic member (second elastic member) **7** covering the tension member **5**. The first elastic member **6** has an elasticity different from that of the second elastic member **7**.

In the first preferred embodiment, the first and second linear members **2**, **3** are wound around the optical fiber **1**, in a state that the first and second linear members **2**, **3** are classified into first and second groups (first and second linear member groups) each having four linear members. The second elastic member **7** of the second linear member **3** has the elasticity lower than that of the first elastic member **6** of the first linear member **2**. It is preferable that a rubber hardness of the linear member **2** is different from that of the linear member **3** by not less than **10** in rubber hardness measured by a durometer type A according to a JIS (Japanese Industrial Standard) "K**6253**".

As the tension member **5**, a string of fibers such as copper wire, aluminum wire, FRP (Fiber Reinforced Plastics) may be used. In particular, the copper wire is preferable since it may be used as a power source or a signal line of a circuitry.

As the elastic members **6**, **7**, a rubber having elasticity or a thermoplastic elastomer is used, since it is necessary to restore a deformation of the optical fiber **1** when a stress to the optical fiber **1** is released. In particular, it is preferable to use a silicone rubber, since the silicone rubber has a characteristic that a variation in elasticity modulus (hardness) is small within a range from a low temperature to a high temperature.

Next, operation of the collision detection optical fiber sensor **100** will be explained below.

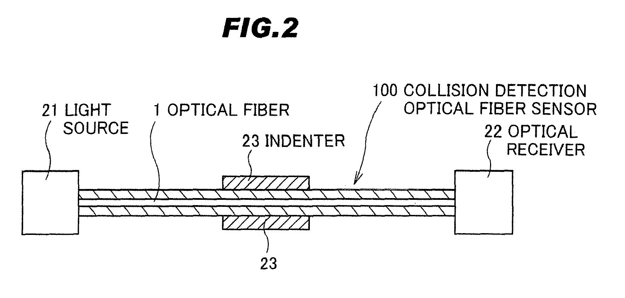

**FIG.2** is an explanatory diagram showing an example of using the collision detection optical fiber sensor.

In the optical fiber **1**, a light source **21** (for example, a light emitting diode having a wavelength of **650** nm) is connected at one end, and an optical receiver **22** (for example, a photodiode) is connected at another end. Furthermore, the optical fiber **1** is outwardly engaged with an indenter **23**.

A principle of the operation of the collision detection optical fiber sensor **100** is that a bending deformation occurs in the optical fiber **1** due to a stress applied to a lateral face of the optical fiber **1**, an optical transmission characteristic is varied (namely, attenuated) by this bending deformation, and application of the stress, namely application of the impact (collision) is sensed by detecting this variation.

The Inventors studied a relationship between a bending deformation and rubber hardness of the linear members and found a principle as below. When a combination of linear members having more than two kinds of rubber hardness (soft and hard), preferably with a hardness difference of not less than **10**, is used as the first and second linear members **2**, **3**, a region of a lateral face of the optical fiber **1** pressed by the second linear member **3** using the hard elastic member **7** deforms largely, while another region of the lateral face of the optical fiber **1** pressed by the first linear member **2** using the soft elastic member **6** deforms small. As a result, the bending deformation which occurs in the optical fiber **1** is increased, and the variation in the optical transmission loss due to the stress is increased, compared with a case that a rubber covered wire with a uniform hardness is used for the linear members.

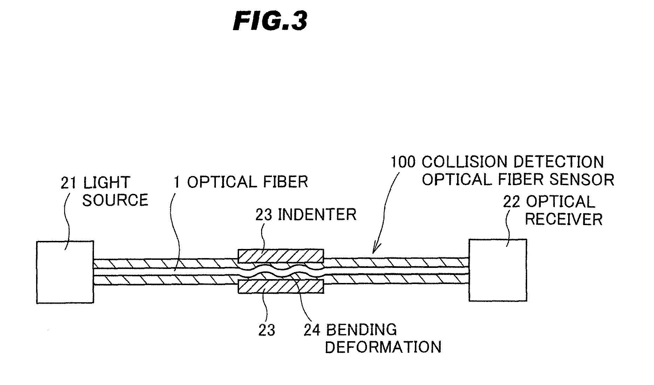

**FIG.3** is an explanatory diagram showing the collision detection optical fiber sensor of **FIG.2** in a state that a bending deformation is occurred by applying a load.

When a load is applied from the indenter **23** to the optical fiber **1**, a pressure is applied to the core **11** in accordance with the different hardness of the first and second elastic member **6**, **7**, so that a small bending deformation **24** occurs. An optical transmission loss occurs due to the bending deformation **24** thus occurred, and a light arriving at the optical receiver **22** from the light source **21** is decreased. A variation in the light arriving at the optical receiver **22** is measured to calculate the optical transmission loss, and an amount of the optical transmission loss is converted into the load, thereby realizing a load detection. When the load from the indenter **23** is released, the deformation of the optical fiber **1** immediately recovers by elastic forces of the elastic members **6**, **7** and the first and second linear members **2**, **3** themselves, so that an optical transmission characteristic is restored to its original state.

Since the first and second linear members **2** and **3** are twisted, a convexo-concave shape is precisely and effectively formed at the lateral face of the optical fiber **1**, when the stress is applied to the lateral face of the optical fiber **1**. In addition, the first and second elastic members **6**, **7** function as members for applying a pressure to the lateral face of the optical fiber **1**.

According to the first preferred embodiment, following effects can be obtained.
(**1**) By providing the first and second linear members **2** and **3** having different hardness (soft and hard) from each other, a degree of the deformation given by the first and second linear members **2**, **3** to the lateral face of the optical fiber **1** can be changed, so that it is possible to improve a sensor sensitivity of the collision detection optical fiber sensor **100**.
(**2**) By providing the tension member **5** in the center of each of the first and second linear members **2** and **3**, strength of the linear members along a longitudinal direction can be assured, so that it is possible to wind the first and second linear members **2**, **3** around the outer periphery of the optical fiber **1**.
(**3**) By using the silicone rubber having a characteristic that a variation in elasticity modulus (hardness) is small within a range from -**30**°C to **70**°C as the elastic members **6** and **7**, it is possible to obtain the collision detection optical fiber sensor **100** having stable stress-optical loss variation characteristics from -**30**°C to **70**°C, even if the collision detection optical fiber sensor **100** is employed in a wide temperature range.

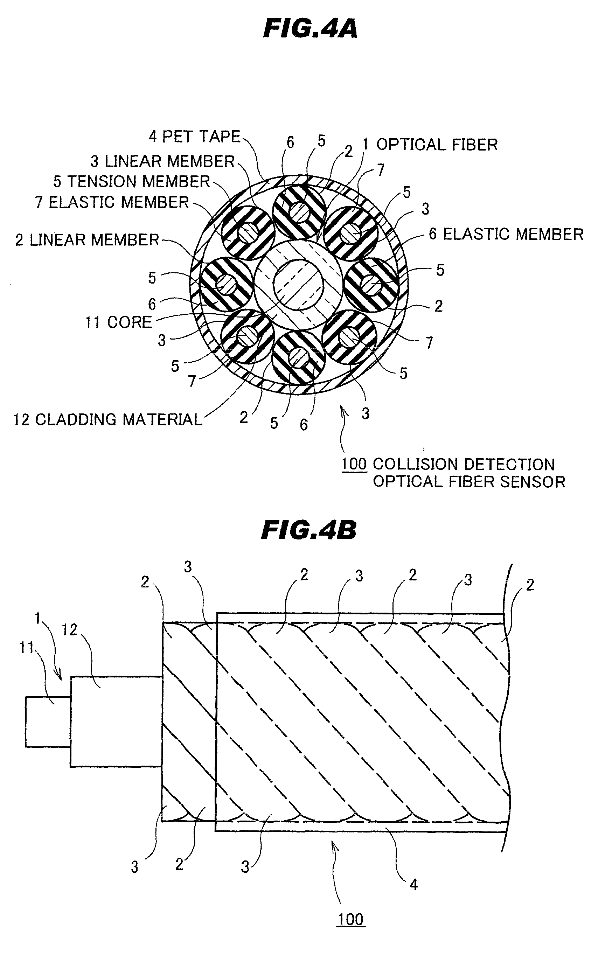

**FIGS.4**A and **4**B are schematic diagrams showing a collision detection optical fiber sensor in a second preferred embodiment according to the invention, wherein **FIG.4**A is a cross sectional view thereof, and **FIG.4**B is a side view thereof.

The second preferred embodiment is similar to the first preferred embodiment, except that the first and second linear members **2** and **3** are disposed alternately along a circumferential direction of the outer periphery of the optical fiber **1**, in place of providing the linear member groups comprising a plurality of the first and second linear members **2** and **3**.

According to the second preferred embodiment, it is possible to improve a sensor sensitivity of the collision detection optical fiber sensor **100** as well as to obtain the collision detection optical fiber sensor **100** having stable stress-optical loss variation characteristics from the low temperature to the high temperature.

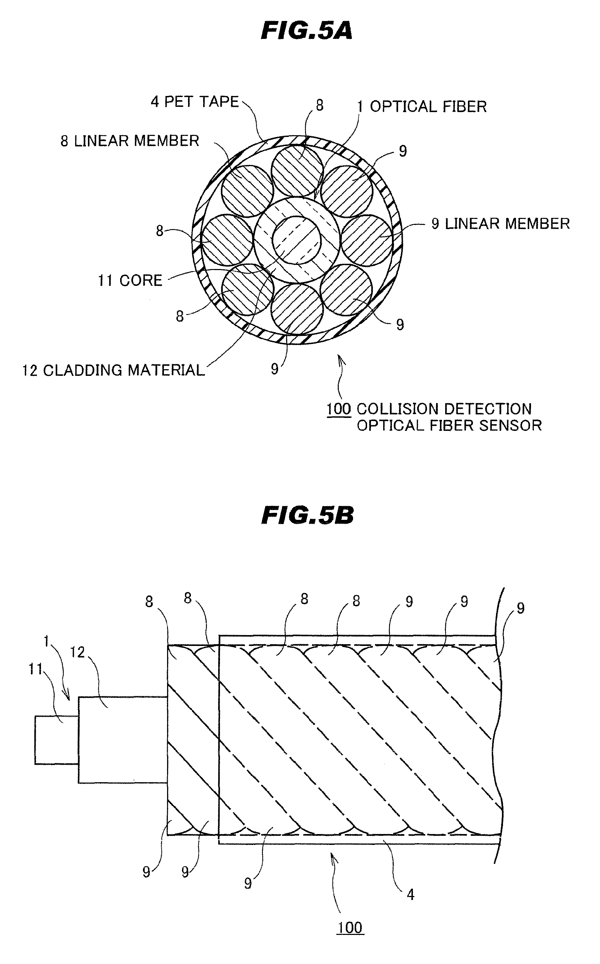

**FIGS.5**A and **5**B are schematic diagrams showing a collision detection optical fiber sensor in a third preferred embodiment according to the invention, wherein **FIG.5**A is a cross sectional view thereof, and **FIG.5**B is a side view thereof.

The third preferred embodiment is similar to the second preferred embodiment shown in **FIG. 4**A and **FIG. 4**B**,** the collision detection optical fiber sensor **100** comprises linear members **8**, **9**, each of which consists of a string-shaped elastic material, in place of the linear members **2**, **3**. Namely, each of the linear member **8**, **9** has a configuration in that the tension member **5** is removed from each of the linear member **2**, **3.** Four linear members **8** constitute a first linear member group and another four linear members **9** constitute a second linear member group. The hardness of the string-shaped linear members **8** and **9** are different from each other.

According to the third preferred embodiment, it is possible to improve a sensor sensitivity of the collision detection optical fiber sensor **100**, since the hardness of the string-shaped linear members **8** and **9** are different from each other.

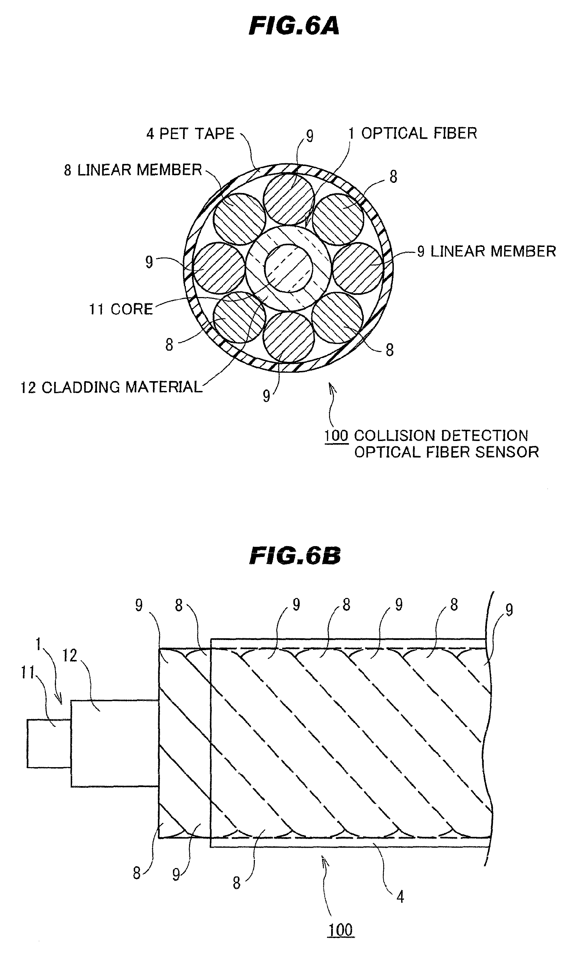

**FIGS.6**A and **6**B are schematic diagrams showing a collision detection optical fiber sensor in a fourth preferred embodiment according to the invention, wherein **FIG.6**A is a cross sectional view thereof, and **FIG.6**B is a side view thereof.

The fourth preferred embodiment is similar to the third preferred embodiment shown in **FIGS.5**A and **5**B, except that the linear members **8** and **9** are disposed alternately along a circumferential direction of the outer periphery of the optical fiber **1**, in place of providing the first and second linear member groups comprising a plurality of the first and second linear members **8** and **9**.

According to the fourth preferred embodiment, it is possible to improve a sensor sensitivity of the collision detection optical fiber sensor **100** as well as to obtain the collision detection optical fiber sensor **100** having stable stress-optical loss variation characteristics from the low temperature to the high temperature.

Particular examples according to the present invention will be explained below.

TABLE **1** is a table showing Examples **1** to **8** of the collision detection optical fiber sensor **100** according to the first preferred embodiment, in which the linear members **2** each comprising the tension member **5** composed of the copper wire and the elastic members **6** and the linear members **3** each comprising the tension member **5** composed of the copper wire and the elastic members **7** are wound around the optical fiber **1**.

**TABLE 1**

| Example | Diameter of tension member/ Diameter of elastic member | Hardness of elastic member **6** | Hardness of elastic member **7** | Hardness difference | Sensitivity (-**30**°C) | Sensitivity (**20**°C) | Sensitivity (**70**°C) |
|---|---|---|---|---|---|---|---|
| **1** | Copper wire **0.3** mm/ Silicone rubber **1.0** mm | **40** | **65** | **25** | **0.27** | **0.3** | **0.306** |
| **2** | Copper wire **0.3** mm/ Silicone rubber **1.0** mm | **50** | **50** | **0** | **0.075** | **0.09** | **0.105** |
| **3** | Copper wire **0.3** mm/ Ethylene Propylene rubber **1.0** mm | **40** | **65** | **25** | **0.06** | **0.3** | **1.17** |
| **4** | Copper wire **0.3** mm/ Silicone rubber **1.0** mm | **50** | **53** | **3** | **0.075** | **0.105** | **0.096** |
| **5** | Copper wire **0.3** mm/ Silicone rubber **1.0** mm | **50** | **65** | **15** | **0.24** | **0.255** | **0.33** |
| **6** | Copper wire **0.3** mm/ Silicone rubber **1.0** mm | **50** | **65** | **15** | **0.24** | **0.27** | **0.33** |
| **7** | Copper wire **0.3** mm/ Silicone rubber **1.0** mm | **40** | **70** | **30** | **0.27** | **0.33** | **0.36** |
| **8** | Copper wire **0.3** mm/ Silicone rubber **1.0** mm | **50** | **60** | **10** | **0.18** | **0.189** | **0.21** |

In the Examples **1** to **8**, the optical fiber **1** comprises a core **11** comprising a crosslinked acrylic resin with an outer diameter of **1.5** mm, and a cladding material **12** comprising a fluororesin with an outer diameter of **2.2** mm.

The tension member **5** comprises a copper wire with an outer diameter of **0.3** mm, and each of the elastic members **6, 7** for covering the tension member **5** has a thickness of **0.35** mm and various hardness as shown in TABLE **1**.

Four linear members **2** and four linear members **3** are disposed continuously in two groups as shown in **FIG.1**A and the linear members **2**, **3** are twisted as shown in **FIG.1**B to be wound around the optical fiber **1**. A winding pitch is **40** mm. After winding eight linear members **2** and **3** around the optical fiber **1**, a PET tape **4** with a thickness of **5** µm is wound such that the winding will not come loose.

The sensitivity of the sensor is defined by an optical transmission loss, which occurs when a load of **1** KN is applied to a **100** mm area at a center of the collision detection optical fiber sensor **100** having a length of **1** m. Measurement is conducted as follows. As shown in **FIG.2**, a light emitted from an LED with a wavelength of **650** nm is input from a light source **21** to one end of the collision detection optical fiber sensor **100**, and the light output from another end is received at an optical power meter as an optical receiver **22**.

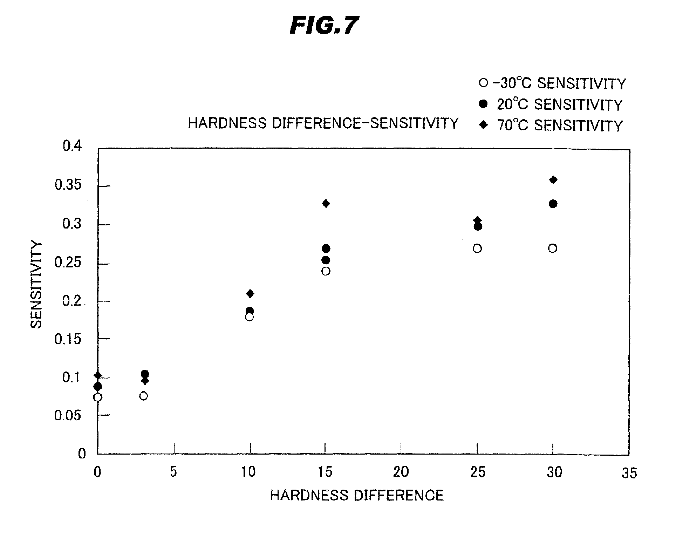

**FIG.7** is a characteristic diagram showing a relationship between hardness difference and sensitivity in Examples **1, 2, 4** to **8** shown in TABLE **1**.

As shown in **FIG.7,** the sensitivity is improved in accordance with the increase in the hardness difference between the elastic members **6** and **7**. The hardness difference is preferably not less than **10,** by which the sensitivity is generally not less than **0.2**. The hardness difference is more preferably not less than **15**.

By comparing the Example **3** with the Example **1** in that the hardness differences are **25**, it is confirmed that the variation in the sensitivity in the Example **1** using the silicone rubber as the elastic member is smaller that in the Example **3** using the ethylene propylene rubber as the elastic member within a temperature variation from -**30**°C to **70**°C.

TABLE **2** is a table showing Examples **9** to **15** of the collision detection optical fiber sensor **100** according to the third preferred embodiment, in which each of the linear members **8**, **9** does not comprise the tension member **5**.

**TABLE 2**

| Example | Diameter of linear members | Hardness of linear member **8** | Hardness of linear member **9** | Hardness Difference | Sensitivity (-**30**°C) | Sensitivity (**20**°C) | Sensitivity (**70**°C) |
|---|---|---|---|---|---|---|---|
| **9** | Silicone rubber string **1.0**mm | **40** | **70** | **30** | **0.255** | **0.3** | **0.315** |
| **10** | Silicone rubber string **1.0**mm | **50** | **50** | **0** | **0.105** | **0.12** | **0.135** |
| **11** | Ethylene Propylene rubber string **1.0** mm | **40** | **65** | **25** | **0.09** | **0.3** | **1.26** |
| **12** | Silicone rubber string **1.0**mm | **50** | **60** | **10** | **0.18** | **0.195** | **0.21** |
| **13** | Silicone rubber string **1.0**mm | **55** | **60** | **5** | **0.135** | **0.165** | **0.18** |
| **14** | Silicone rubber string **1.0**mm | **50** | **65** | **15** | **0.21** | **0.24** | **0.3** |
| **15** | Silicone rubber string **1.0**mm | **40** | **65** | **25** | **0.24** | **0.285** | **0.33** |

In the Examples **9** to **15**, the optical fiber **1** comprises a core **11** comprising a crosslinked acrylic resin with an outer diameter of **1.5** mm a cladding material **12** comprising a fluororesin with an outer diameter of **2.2** mm. Four linear members **8** and four linear members **9** are disposed continuously in two groups as shown in **FIG.5**A and the linear members **8**, **9** are twisted as shown in **FIG.5**B to be wound around the optical fiber **1**. A winding pitch is **40** mm. After winding eight linear members **8** and **9** around the optical fiber **1**, a PET tape **4** with a thickness of **5** µm is wound such that the winding will not come loose.

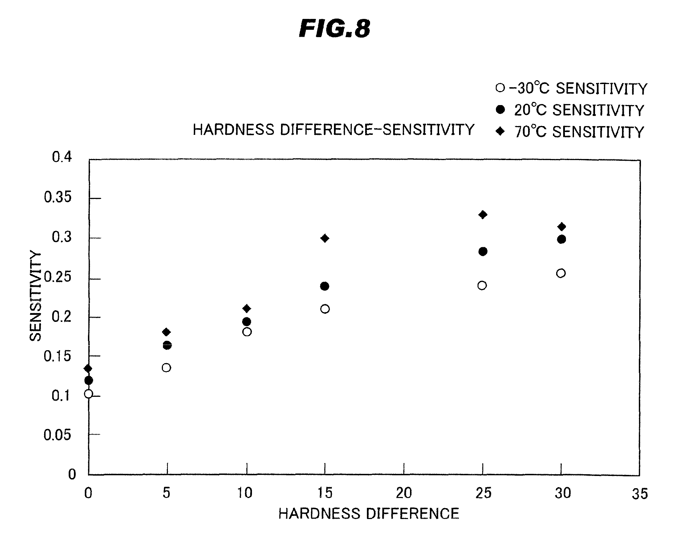

**FIG.8** is a characteristic diagram showing a relationship between hardness difference and sensitivity in Examples **9, 10, 12** to **15** shown in TABLE **2**. As shown in **FIG. 8,** the sensitivity is improved in accordance with the increase in the hardness difference between the elastic member composing the linear member **8** and the elastic member composing the linear member **9**. The hardness difference is preferably not less than **10**, by which the sensitivity is generally not less than **0.2**. The hardness difference is more preferably not less than **15**.

By comparing the Example **15** with the Example **11** in that the hardness differences are **25**, it is confirmed that the variation in the sensitivity in the Example **15** using the silicone rubber as the elastic member is smaller than in the Example **11** using the ethylene propylene rubber as the elastic member within a temperature variation from -**30**°C to **70**°C.

In addition, the present invention is not limited to the preferred embodiments as described above, and various modifications can be made without going beyond the scope of the invention. For example, a combination of elements in the respective preferred embodiments can be made arbitrarily. For example, it is possible to provide the collision detection optical fiber sensor **100** by combining the linear member **2** or **3** in the first preferred embodiment with the linear member **8** or **9** in the third preferred embodiment.

Further, the first linear member groups of the first linear members and the second linear member groups of the second linear members may be disposed alternately or continuously around the optical fiber **1**. For example, two first linear member groups each comprising two first linear members and two second linear member groups each comprising two second linear members may be arranged alternately.

## Claims

1. A collision detection optical fiber sensor, comprising:
an optical fiber including a core and a cladding material;
a first linear member having an elasticity and twisted around an outer periphery of the cladding material; and
a second linear member having an elasticity different from that of the first linear member, and twisted around the outer periphery of the cladding material together with the first linear member.

2. The collision detection optical fiber sensor according to Claim **1,** wherein the first linear member and the second linear member are disposed alternately along a circumferential direction of the optical fiber to be twisted around the optical fiber.

3. The collision detection optical fiber sensor according to Claim **1**, wherein a first linear member group comprising a plurality of the first linear member and a second linear member group comprising a plurality of the second linear members are disposed alternately along a circumferential direction of the optical fiber to be twisted around the optical fiber.

4. The collision detection optical fiber sensor according to Claim **1**, wherein each of the first linear member and the second linear member comprises a tension member and an elastic member covering an outer periphery of the tension member.

5. The collision detection optical fiber sensor according to Claim **1**, wherein each of the first linear member and the second linear member comprises an elastic member with a string-shape.

6. The collision detection optical fiber sensor according to Claim **4** or **5**, wherein a rubber hardness difference measured by a durometer type A according to a JIS K**6253** between the elastic member of the first linear member and the elastic member of the second linear member is not less than **10**.

7. The collision detection optical fiber sensor according to Claim **4** or **5**, wherein the elastic member comprises a silicone rubber.

8. The collision detection optical fiber sensor according to Claim **4**, wherein the tension member comprises a copper wire.

9. The collision detection optical fiber sensor according to Claim **1,** wherein each of the first linear member and the second linear member consists of an elastic member with a string-shape.
